# EUROPÄISCHE PATENTANMELDUNG

(11) **EP 0 967 471 A2**
(43) Veröffentlichungstag der Anmeldung: **29.12.1999**
(21) Anmeldenummer: 99111108.9
(22) Anmeldetag: 08.06.1999
(51) Int. Cl.: G01M 3/18

(54) **Segmentierte Messsonde für Abwasserrohre**

(30) Priorität: 23.06.1998 DE 19827854
(71) Anmelder: Seba-Dynatronic Mess- und Ortungstechnik GmbH, 96148 Baunach (DE)
(72) Erfinder: Schuberth, Harald Dr.-Ing., 96149 Breitengüssbach (DE); Kreutzer, Martin Prof. Dr.-Ing., 66424 Homburg (DE)
(74) Vertreter: Riebling, Peter, Dr.-Ing.

(57) **Zusammenfassung**

Die Erfindung betrifft ein Verfahren und eine Vorrichtung zur Bestimmung von Leckagen in Abwasserrohren.

## Beschreibung

Die Erfindung betrifft ein Verfahren und eine Vorrichtung zur Bestimmung von Leckagen in Abwasserrohren nach den Oberbegriffen der Patentansprüche 1 und 11.

Ein derartiges Verfahren und eine derartige Vorrichtung sind beispielsweise aus der eigenen EP 0 786 653 A1 bekannt geworden. Dabei handelt es sich um ein Verfahren mit Einsatz einer Meßsonde zur Bestimmung von Ort und Ausmaß von Leckagen in Abwasserkanälen und ähnlichen Leitungssystemen, bei der ein elektrisch nicht zu hoch leitendes Rohr vorhanden ist, welches in einen elektrisch leitenden Untergrund verlegt ist.

Ein derartiges Verfahren und eine dazugehörige Vorrichtung sind beispielsweise in der DE 40 10 622 A1 beschrieben. Bei dieser bekannten Vorrichtung wird in den Abwasserleiter eine Sonde verlegt und eingeführt, welche in Längsrichtung des Rohres bewegbar ausgebildet ist. Von der Elektrode gehen Strompfade nach allen Richtungen aus, die sich im wesentlichen in Längsrichtung des Abwasserstromes erstrecken. Sobald die Elektrode an einem Leck der Rohrleitung vorbeibewegt wird, wird die Stromemission in der Nähe dieses Leckes zunehmen, was von außerhalb des Rohres durch eine entsprechende Meßanordnung meßbar ist, wobei diese Meßanordnung im wesentlichen besteht aus einer Spannungsquelle und einem Strommeßgerät, wobei die Spannungsquelle mittels einer Fernerde im Erdboden geerdet ist.

Ein Leck zeichnet sich dadurch aus, daß Abwasser in das umgebende Bodenreich exfiltriert und hierdurch der Stromfluß an der Elektrode verändert wird, sobald diese Elektrode in die Nähe des Leckes gebracht wird.

Nachteilig bei dem bekannten Verfahren ist jedoch, daß es wenig selektiv auf ein derartiges Leck anspricht. Es ist nämlich nachteilig, daß ein relativ hoher Strom in Längsrichtung des Abwasserleiters über das Abwasser selbst fließt, so daß diese Methode nicht sehr selektiv ist.

Bei der EP 0 786 653 A1 wurde ein Verfahren und eine Vorrichtung der eingangs genannten Art so weitergebildet, daß mit wesentlich größerer Empfindlichkeit gemessen werden kann, so daß auch kleinere Leckes in Abwasserleitungen und dgl. festgestellt werden können.

Wesentliches Merkmal ist, daß nicht mehr einfach eine stromemittierende Elektrode in einem Abwasserleiter bewegt werden, sondern daß eine Meßsonde in dem Abwasserleiter bewegt wird, welche Meßsonde im wesentlichen aus mindestens einem elektrisch leitfähigem Träger besteht, an dem mindestens ein Stromflußsensor angeordnet ist.

Der Träger kann hierbei starr als Stab ausgebildet sein. Es ist aber auch möglich, eine Drahtspirale oder einen im Rohr gespannten Draht zu verwenden. Bei der Verwendung eines Stabes kann der Stab ein- oder mehrteilig ausgebildet sein.

Diese kann nicht nur für die Leckortung in Abwasserkanälen eingesetzt werden, sondern in beliebigen Rohrleitungen, bei denen vorausgesetzt wird, daß ein elektrisch leitfähiges Medium in der Rohrleitung geführt wird und die Rohrleitung selbst nicht zu hoch leitend (metallisch) ist, so daß der Stromfluß in der leckagefreien Rohrwandung in Richtung zum umgebenden Erdreich nicht zu hoch ist.

Sie ist demzufolge nicht nur auf Rohre von Abwasserkanälen beschränkt, sondern könnte auch zur Leckortung bei anderen leitfähigen Medien in Rohrleitungen entsprechender Leitfähigkeit verwendet werden.

Sie beruht auf dem Effekt, daß man einen leitfähigen Metallstab oder einen metallbeschichteten Kunststoffstab oder dgl. in Längsrichtung in einer Rohrleitung bewegt, wobei nicht zwangsläufig eine zentrische Anordnung der Sonde in der Rohrleitung vorausgesetzt wird, sondern die Sonde könnte auch exzentrisch in der Rohrleitung in Längsrichtung bewegt werden.

Auch können gleichzeitig mehrere Meßsonden radial auf der Innenseite der Rohrwandung auf einem entsprechend geeigneten Träger bewegt werden. Hierdurch wird zusätzlich zur Bestimmung der axialen Position auch die Bestimmung der radialen Position der Leckage möglich.

Die Meßsonden können dabei auch aus einfachen, stromemittierenden Elektroden bestehen, deren Ableitung in Längsrichtung, verglichen mit den Verhältnissen in der DE 40 10 622 A1, jetzt um den Faktor 1/n (n = Anzahl der Meßsonden) reduziert ist. Diese Anordnung bedeutet gegenüber der DE 40 10 622 A1 eine ganz erhebliche Verbesserung der Auflösung.

Diese Sonde besteht in einer Ausführungsform demzufolge aus einem leitfähigen Stab, auf dem im Abstand voneinander zwei Stromsensoren angeordnet sind, und der Stab ist an der einen Seite an eine Spannungsquelle angeschlossen. Die Spannungsquelle ihrerseits ist zwischen dem Stab und einer Fernerde angeschlossen.

Der Stromfluß durch die beiden Stromsensoren wird erfaßt und über ein Kabel an die Außenseite des Rohres weitergeleitet, wo eine entsprechende Meßanordnung an der Erdoberfläche angeordnet ist.

Man geht hierbei von folgendem Prinzip aus:

Wenn man einen leitfähigen Metallstab, der mit einem Strom versorgt wird, axial in ein mit einer leitfähigen Flüssigkeit gefülltes Rohr einbringt, dann erstrecken sich von der Oberfläche des Metallstabs Stromlinien durch diese Flüssigkeit hindurch in Richtung zur Rohrwandung.

Bereits aufgrund des Standes der Technik wurde erläutert, daß es zu unerwünschten Längsströmen kommt, wenn man keine Maßnahmen trifft, um eine Bündelung der Stromlinien zu erreichen.

Bei der EP 0 786 653 A1 wurde mit verschiedenen Vorrichtungen eine Bündelung von Stromlinien an der Sonde dadurch erreicht, daß die interessierenden Stromlinien sich im wesentlichen normal zur Wandung des Rohres erstrecken. Diese Stromlinien sind von besonderem Interesse, weil diese Stromlinien hoch empfindlich sind gegenüber einer Veränderung der Leitfähigkeit in der Rohrwandung, dort nämlich wo ein Leck sich befindet.

Es wurde also ein Verfahren und eine Vorrichtung entwickelt, mit dem selektiv die Stromlinien ausgewertet werden, die sich im wesentlichen normal zur Rohrwandung befinden, während die anderen Stromlinien, die sich schräg davon erstrecken oder die gar in Längsrichtung des Mediums sich erstrecken, ausgeblendet werden.

Dazu wurde vorgesehen, daß auf einem leitfähigen Metallstab zwei im Abstand zueinander angeordnete Stromsensoren angeordnet sind und diese Stromsensoren aus jeweils einem Ringkern bestehen, welcher ringsum mit einer Wicklung bewickelt ist, wobei die Anschlüsse der jeweiligen Wicklung nach außen geführt sind. Es handelt sich um eine Rogowski-Spule. Es können jedoch beliebige bekannte Stromsensoren verwendet werden, die geeignet sind, relativ kleine Ströme im Bereich von wenigen mA zu messen.

Wichtig ist, daß man, wenn man die Differenz zwischen dem Stromfluß durch den einen Stromsensor und dem Stromfluß durch den anderen Stromsensor nimmt, einen Meßstrom bzw. einen Ableitstrom erhält, welcher die Information über den Ort der Leckage enthält. Die Größe des Meßstroms durch die Leckage gibt dabei Auskunft über das Ausmaß der Leckage.

Die Sonde ist nämlich dreigeteilt und besteht aus einem hinteren Sondenteil, einem mittleren Sondenteil und einem vorderen Sondenteil. Die Dreiteilung ist in der ersten Ausführung dadurch bewirkt, daß die Sonde als durchgehender Metallstab ausgebildet ist, daß aber der mittlere Sondenteil definiert wird durch den Zwischenraum, der sich zwischen den beiden im Abstand zueinander angeordneten Stromsensoren ergibt. Der mittlere Teil ist dann der Sensorteil. Der Strom, der hier in Richtung zur Rohrwandung emittiert wird, wird gemessen. Die beiden äußeren Teile der Sonde haben nur die Aufgabe, den Stromfluß des mittleren Sondenteils in Richtung zur Rohrwandung sicherzustellen. Dies geschieht dadurch, daß sich alle drei Teile der Sonde auf derselben Potentialebene befinden, wobei im ersten Ausführungsbeispiel alle drei Teile aus einem durchgehenden Metallstab oder einem entsprechenden Kunststoffteil, welches metallisiert ist, bestehen.

Voraussetzung für die Messung ist, daß die beiden Stromsensoren genau identisch ausgebildet sind, um so eine Aussage über den Differenzstrom treffen zu können.

In einer Weiterbildung war es vorgesehen, nur einen einzigen Stromsensor zu verwenden, durch den aber zwei Ströme geführt werden, um so wieder eine Differenzbildung zwischen zwei Strömen zu erreichen. Die Messung des zweiten Stroms wird allerdings nicht durch einen zweiten, entfernt vom ersten Stromsensor angeordneten Sensor erreicht, sondern sie wird dadurch erreicht, daß eine mechanische Trennung der durchgehenden Metallsonde durchgeführt und im Unterbrechungsbereich eine Leitung sowohl an die eine Stirnseite als auch an die andere Stirnseite der daran anschließenden Sondenteile angeschlossen wird, wobei diese Leitung durch den ersten Stromsensor hindurchgeführt ist und so im ersten Stromsensor sofort ein Meßsignal erzeugt, welches dem zu messenden Differenzstrom entspricht.

Auf diese Weise muß nicht mehr sichergestellt werden, daß zwei identische Stromsensoren verwendet werden, da nur ein einziger Stromsensor nötig ist.

In einer dritten Ausgestaltung war es vorgesehen, daß die Sonde nicht als Metallstab ausgebildet ist, sondern als relativ dünne metallisch leitende Spirale, die als Draht in der Leitung entlang bewegt werden kann, so daß auch sehr dünne Abwasserrohre (Hausanschlüsse u. dgl.) untersucht werden können.

Zur Verbesserung der Sondeneigenschaft kann es vorgesehen sein, daß im Abstand hintereinander auf diesem Spiraldraht zwei Kugelelektroden oder andere leitfähige Körper befestigt sind, die leitfähig mit dem Draht verbunden sind. Im Zwischenraum zwischen den beiden Elektroden sind dann wieder die vorher beschriebenen zwei Stromsensoren angeordnet, die nach dem vorher beschriebenen Prinzip arbeiten.

Es bedarf also nicht eines metallischen Stabes von einer Länge von z. B. einem Meter, sondern es kann auch eine durchgehende Spirale verwendet werden, auf deren Bereich die Sonde definiert wird.

In einer vierten Ausgestaltung war es vorgesehen, daß stationär in dem zu untersuchenden Rohr ein Draht gespannt wird, der nicht bewegt wird, wobei auf diesem Draht eine Sonde bewegbar ist. An den Draht wird dann eine Spannung angelegt, und auf dem Draht ist dann die Sonde bewegbar, die aus den beiden vorher genannten Stromsensoren besteht, die im gegenseitigen Abstand voneinander angeordnet sind und die auf Abstand durch entsprechende Stäbe gehalten sind; diese Stäbe sind isolierend ausgebildet.

Durch die Anordnung der beiden Stromsensoren in gegenseitigem Abstand voneinander wird somit sichergestellt, daß die beiden Stromsensoren nur den zwischen den Stromsensoren befindlichen Abschnitt des Drahtes als Meßstrecke erfassen.

In einer weiteren Ausgestaltung kann die, beim Metallstab zwangsläufige Potentialgleichheit der drei Sondenteile bei mechanischer und elektrische Trennung durch eine aktive Regelschaltung erzeugt werden. In diesem Falle wäre dann einfach der durch das mittlere Sondenteil emittierte Strom direkt zu messen.

Ein Nachteil der bekannten Meßsonde ist, daß eine nur ungenügende Auflösung der Messung im Abwasserrohr gegeben ist, weil die bekannte Meßsonde auf einem Vollkreis des Rohres die Messung durchführt und demzufolge kommt es zu einer nicht exakten Messung, weil die Rohrwandung immer nur als Gesamtes erfaßt werden kann.

Ist nämlich ein Leck in einer Rohrwandung vorhanden, dann wird durch dieses Leck hindurch ein Fehlerstrom der Meßsonde fließen. Diesem Fehlerstrom überlagert ist der gesamte, über den Umfang sich erstreckende Ableitstrom, der längs des Umfangs der Rohrwandung fließt und der das Meßergebnis verfälscht.

Daher besteht bei der bekannten Meßsonde der Nachteil, daß Fehler überhaupt schwer erkennbar sind, weil der Ableitstrom, der sich längs der Rohrwandung erstreckt, relativ groß zum eigentlich zu erfassenden Fehlerstrom ist und daher ist die Messung nur schwer auswertbar.

Im übrigen besteht der weitere Nachteil, daß eine Lagenbestimmung des Leckes (oben/unten, an der Seite) nicht möglich ist, weil die in der genannten Druckschrift offenbarte Meßsonde keine radiale Messung durchführt, sondern lediglich eine axiale Messung.

Der Fehlerort des Leckes in der Rohrwandung kann also nicht lagengenau am Umfang bestimmt werden.

Der vorliegenden Erfindung liegt deshalb die Aufgabe zugrunde, eine Meßsonde der eingangs genannten Art so weiterzubilden, daß mit wesentlich größerer Auflösung gemessen werden kann und daß eine lagenrichtige Zuordnung des Leckes über den Umfang des gemessenen Rohres möglich ist.

Zur Lösung der gestellten Aufgabe ist die Erfindung durch die technische Lehre des Anspruches 1 gekennzeichnet.

Wesentliches Merkmal der Erfindung ist, daß nun die Mittelelektrode segmentiert ist und zwar in radialäquidistante, galvanisch verbundene Segmente, wobei jedes einzelne Segment eine quasi abtastende Strommessung durchführt.

Damit besteht nun der wesentliche Vorteil, daß über den Umfang der Meßsonde hinweggesehen die Ströme der einzelnen Segmente abgetastet werden, so daß eine lagenrichtige Bestimmung des Leckes am Umfang der Rohrwandung nun erstmals möglich ist.

Gleichzeitig ergibt sich der weitere wesentliche Vorteil, daß der Ableitstrom nun wesentlich geringer ist, denn es wird nur noch der Ableitstrom pro gemessenes Segment betrachtet, der Ableitstrom über den Umfang der restlichen Segmente entlang der Rohrwandung hinweggesehen spielt keine Rolle mehr.

Eine derartige Segmentierung der Mittelelektrode bringt eine Verringerung des Ableitstromes je Segment, umgekehrt proportional zur Anzahl der Segmente, mit sich. Damit steigt der oben angesprochene Störabstand bei der Messung von Leckagen entsprechend proportional zur Anzahl der Segmente.

Durch die Segmentierung der Mittelelektrode wird insgesamt der von der Mittelelektrode zu leistende Ableitstrom auf die einzelnen Segmente verteilt. Dies gilt jedoch nicht für den Leckstrom durch ein radial konzentriertes Leck. Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schematisiert einen Schnitt durch ein Abwasserrohr mit einer Sonde.
- Figur 2:: Schnitt durch den Mittelteil der Sonde.
- Figur 3:: Seitenansicht der Sonde im Bereich des Mittelteils.
- Figur 4:: Draufsicht auf eine Ausführungsform einer Elektrode.

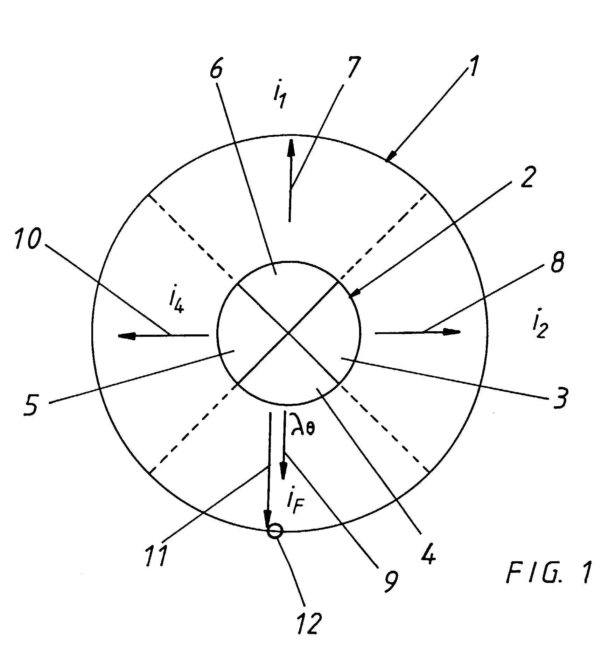

Gemäß Figur 1 ist in einem Abwasserrohr 1 eine Sonde 2 längsverschiebbar geführt.

In Figur 1 ist lediglich schematisiert dargestellt, daß die Sonde in ihrem Mittelteil aus segmentförmig angeordneten Elektroden besteht, die nachfolgend als Segmente 3-6 bezeichnet werden.

Die Segmente 3-6 liegen alle auf gleichem Potential und werden von der gleichen Quelle aus versorgt. Daher fließt von jedem Segment 3-6 ein entsprechender Ableitstrom 7-10 radial in Richtung zur Rohrwandung.

Die Ableitströme 7-10 durch die einzelnen Segmente ergeben in der Summe den gesamten, anfallenden Ableitstrom über den Umfang der Rohrwandung gesehen.

Wichtig ist aber, daß die Ableitströme 7-10 nun wesentlich geringer sind, als bei dem bisher bekannten Stand der Technik, weil jeder einzelne Ableitstrom nur einen Bruchteil des gesamten Ableitstromes darstellt und zu der Anzahl der vorhandenen Segmente 3-6 umgekehrt proportional ist.

Die Anzahl der Segmente ist hierbei beliebig, d. h., nicht wie im Ausführungsbeispiel dargestellt, auf lediglich vier Segmente 3-6 begrenzt. Im praktischen Einsatzfall wird jedoch eine wesentlich höhere Anzahl von Segmenten verwendet wie z. B. acht Segmente oder mehr.

Die Erfindung betrifft also eine Mindestanzahl von Segmenten von mindestens zwei. Es wird also eine segmentierte Mittelelektrode von mindestens zwei Segmenten als erfinderisch beansprucht.

In der Rohrwandung des Abwasserrohres 1 sei nun ein Leck 12 im Rohrboden, in der Zeichnung an der untersten Stelle des Abwasserrohres 1 dargestellt, vorhanden.

Aus der Zeichnung ist nun erkennbar, daß sich dem Ableitstrom 9 ein Fehlerstrom 11 überlagert, der im wesentlichen von dem Segment 4 erzeugt wird. Die anderen Segmente 3, 5-6 tragen zur Erzeugung dieses Fehlerstromes 11 praktisch nicht bei.

Ebenso ist wichtig, im vorliegenden Ausführungsbeispiel überdeckt daher der Ableitstrom 9 nicht mehr den Fehlerstrom 11, weil er entsprechend der Segmentierung kleiner ist als der gesamte Ableitstrom. Diese Meßanordnung ist besonders dann vorteilhaft, wenn der Ableitstrom über die Rohrwandung des Abwasserrohres 1 relativ groß ist. Hier setzen dann die Vorteile der segmentierten Mittelelektrode ein, so wie dies anhand er Figur 1 beschrieben wird.

Es kann nun durch Messung der jeweiligen Fehlerströme in den einzelnen Segmenten 3-6 genau der Ort des Leckes 12 auf dem Rohrboden festgestellt werden, weil eben - wie oben dargestellt - die anderen Segmente 3, 5-6 praktisch keinen Fehlerstrom 11 erzeugen.

Im gezeigten Ausführungsbeispiel ist dargestellt, daß die Sonde zentral in der Längsachse des Abwasserrohres auf einem Schlitten gezogen wird und also zentral im Abwasserrohr in Längsrichtung entlanggeführt wird.

Hierauf ist die Erfindung jedoch nicht beschränkt, es ist in einer anderen Ausführung auch möglich, daß die Sonde dezentral in Richtung der Längsachse des Rohres geführt werden kann.

Wichtig ist, daß nun auch eine Zuordnung des jeweiligen Segmentes 3-6 zu der konkreten Lage der Sonde 3 im Rohr getroffen werden muß. Hierbei wird bevorzugt ein Winkeldecoder verwendet, der die Orientierung der Sonde (Drehlage) im Abwasserrohr 1 feststellt. Auf diese Weise ist es möglich, beispielsweise festzustellen, daß bei Messung eines Fehlerstroms im Segment 4 ein Fehler in der Wandung des Abwasserrohres 1 um die Position an der tiefsten Stelle des Rohrbodens vorhanden sein muß.

Anstatt der Verwendung eines Winkeldecoders können auch Vorkehrungen getroffen werden, die verhindern, daß sich diese Sonde 2 im Abwasserrohr 1 dreht.

Hierzu wäre eine radiale Lagensicherung der Sonde notwendig, die verhindert, daß sich die Sonde 2 in unerwünschter Weise im Abwasserrohr 1 dreht. Hat man eine derartige radiale Lagenfixierung, dann kann der Winkeldecoder entfallen und es ist eine automatische Zuordnung des jeweiligen Segmentes 4-6 zu der jeweiligen Wandungsposition des Abwasserrohres 1 vorgegeben.

Damit ist der Fehlerort dem Segment jeweils sicher zugeordnet.

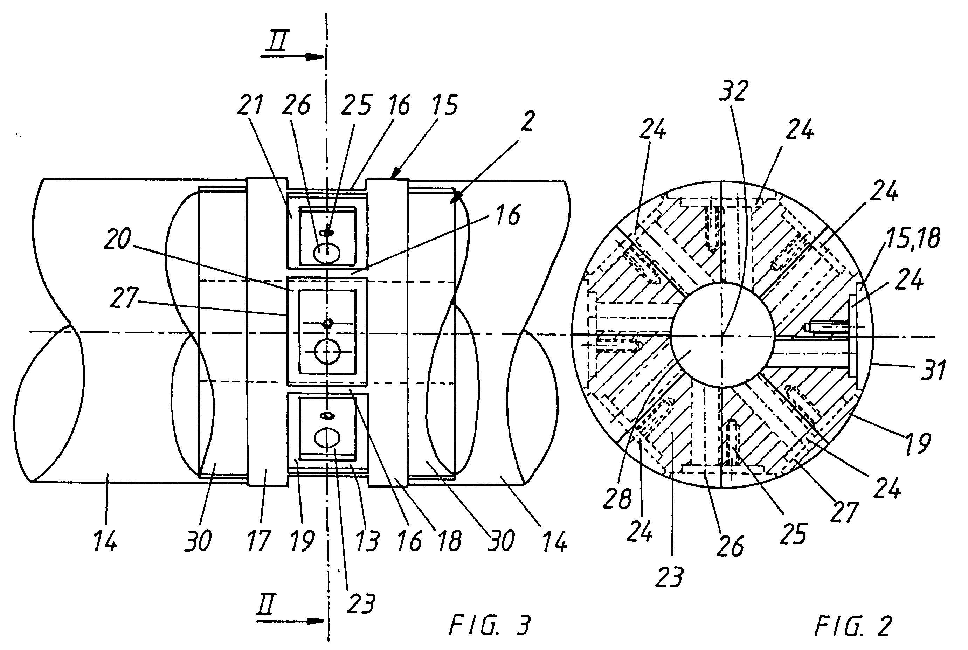

- Die Figur 2:: Zeigt einen Schnitt durch die Mittelsektion einer Sonde gemäß des Schnittes II-II in Figur 3.
- Figur 3:: Seitenansicht des mittleren Teils einer Sonde.

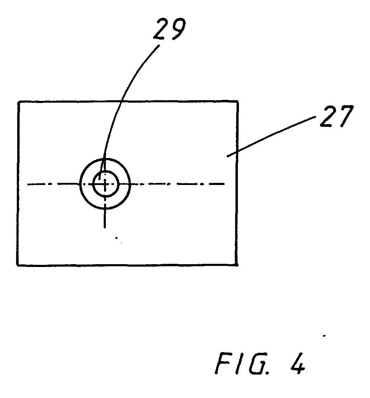

- Figur 4:: Draufsicht auf eine Elektrode zur Verwendung mit der Sonde.

In Figur 2 ist ein Schnitt durch die Mittelsektion der Sonde 2 dargestellt, nämlich durch den Mittelteil 13.

In Figur 3 ist lediglich ein Teil dieser Sonde 2 dargestellt, nämlich der wesentliche Mittelteil 13. Die Sonde setzt sich nach links und rechts durch entsprechend lange Sondenkörper 14 fort, die metallisch ausgebildet sind und die auf dem gleichen Potential liegen, wie die einzelnen segmentförmigen Elektroden 27.

Die beiden Sondenkörper 14 sind miteinander galvanisch verbunden und ihrerseits sind diese wieder mit den einzelnen Elektroden 27 galvanisch verbunden. Statt der vorgesehenen galvanischen Verbindung kann auch eine andere Ausführungsvariante verwirklicht werden, bei der die genannten Teile (Elektroden 27 und Sondenkörper 14) auf gleichem Potential liegen. Die Potentialgleichheit wird dabei durch eine entsprechende elektronische Schaltung verwirklicht.

Der Mittelteil 13 ist im wesentlichen durch einen in etwa runden Isolierkörper 15 definiert, der zwei zueinander beabstandete und durch Stege 16 miteinander verbundene Seitenstege 17, 18 in der Form von Ringen aufweist, die parallel zueinander verlaufen und ringsum in sich geschlossen sind.

Links und rechts an den ringförmigen Seitenstegen 17, 18 sind werkstoffeinstückig rohrförmige Ansätze 30 angeformt. Diese Ansätze 30 dienen zur Fixierung des gesamten Isolierkörpers 15 der Sonde 2.

Die sogenannten Guard-Elektroden bestehen im übrigen aus rohrförmigen Metallkörpern (Sondenkörpern 14), die als einseitig offene Rohre jeweils von links und rechts auf die aus Isoliermaterial bestehenden Ansätze 30 des Isolierkörpers 15 aufgeschoben sind.

Der Außenumfang dieser Sondenkörper 14 schließt damit etwa bündig mit dem Außenumfang der Seitenstege 17, 18 ab.

Der Isolierkörper 15 weist in seinem mittleren Bereich einen radial umlaufenden Bereich mit vermindertem Durchmesser auf in dem die entsprechenden Elektroden 27 angeordnet sind.

Hierbei sind eine Reihe von gleichmäßig am Umfang verteilten Ausnehmungen 19 (siehe Figur 2) vorgesehen, welche im Isolierkörper 15 in Montageflächen 24 münden, die etwa eben und plattenförmig ausgebildet sind. Diese Montageflächen 24 sind Teil der Elektrodenträger 23 dieses Isolierkörpers 15. Im Bereich dieser Ausnehmungen 19 werden nun einzelne, plättchenförmige Elektroden 27 (vergleiche Figur 4) befestigt. Bevorzugt erfolgt hier die Befestigung dadurch, daß eine nicht näher dargestellte Gewindeschraube durch die Bohrung 29 in der Elektrode 27 hindurchgreift und in die zugeordnete Gewindebohrung 25 im Elektrodenträger 23 eingeschraubt ist.

Andererseits erstrecken sich in gleichmäßigem Umfang von dem zentralen Hohlraum 28 aus die Kabelkanäle 26 für die Durchführung der Kabel in Richtung zu dem Elektrodenplättchen 27. Jedes Elektrodenplättchen 27 ist mit einem zugeordneten Signalkabel verbunden.

In Figur 2 ist beispielhaft ein einziges Elektrodenplättchen 27 in eine derartige Ausnehmung 19 eingezeichnet. Hierbei ist erkennbar, daß das Elektrodenplättchen etwa flach und eben ausgebildet ist.

Es sind selbstverständlich eine Reihe gleichartiger Ausnehmungen 20, 21 gleichmäßig am Umfang verteilt angeordnet.

In jeder Ausnehmung ist eine derartige Elektrode 27 (sonst nicht zeichnerisch dargestellt) angeordnet.

Die Elektroden 27 füllen etwa die jeweilige Ausnehmung aus, so wie dies anhand der Ausnehmung 20 in Figur 3 gezeigt ist.

Die Erfindung ist nicht auf ebene, plattenförmige Elektroden 27 beschränkt.

In einer anderen Ausgestaltung können die Elektroden auch an ihrer Oberfläche etwa rund ausgebildet werden, um so mit dem Außenumfang 31 der gesamten Sonde etwa bündig abzuschließen.

Die Erfindung ist nicht darauf beschränkt, daß die einzelnen Elektroden 27 äquidistant von der Mitten-Längsachse 32 angeordnet sind; sie könnten auch exzentrisch zur Mitten-Längsachse 32 angeordnet sein.

Eine andere Ausgestaltung der Erfindung sieht vor, daß die Elektroden nicht gleichmäßig am Umfang verteilt angeordnet sind, sondern daß sie in einem bestimmten Umfangsbereich, in dem mit dem vermehrten Auftreten von Leckes zu rechnen ist, in größerer Anzahl angeordnet sind als vergleichsweise in Umfangsbereichen des Abwasserrohres, in dem nicht mit einem derartig gehäuften Auftreten von Leckes gerechnet werden muß.

Schließlich können die einzelnen Elektroden 27 der Sonde 2 auch unterschiedlich groß ausgeformt werden, d. h. beispielsweise in dem Bereich der Sonde, welche die untere Hälfte eines im Querschnitt betrachteten Abwasserrohres 1 sondiert, können die Elektroden großflächiger ausgebildet sein als vergleichsweise die Elektroden, die in der oberen Hälfte des so betrachteten Abwasserrohres 1 sondieren.
Der Vorteil der vorliegenden Erfindung besteht nun darin, daß anhand der Aufteilung der Mittenelektrode in mehrere radial angeordnete Elektroden eine wesentlich genauere Lokalisierung eines Defekts in einem Abwasserkanal durch die gezielte Anordnung und Größenausbildung der entsprechenden Elektroden ermöglicht wird.

### Zeichnungslegende

- 1: Abwasserrohr
- 2: Sonde
- 3: Segment
- 4: Segment
- 5: Segment
- 6: Segment
- 7: Ableitstrom
- 8: Ableitstrom
- 9: Ableitstrom
- 10: Ableitstrom
- 11: Fehlerstrom
- 12: Leck
- 13: Mittelteil
- 14: Sondenkörper
- 15: Isolierkörper
- 16: Steg
- 17: Seitensteg
- 18: Seitensteg
- 19: Ausnehmung
- 20: Ausnehmung
- 21: Ausnehmung
- 22:
- 23: Elektrodenträger
- 24: Montagefläche
- 25: Gewindebohrung
- 26: Kabelkanal
- 27: Elektrode
- 28: Hohlraum
- 29: Bohrung
- 30: Ansatz
- 31: Außenumfang
- 32: Mitten-Längsachse

## Patentansprüche

1. Verfahren zur Bestimmung von Ort und Ausmaß von Leckagen in Abwasserkanälen und ähnlichen Leitungssystemen, wobei die Rohrleitungen elektrisch nicht zu hoch leitend und das darin strömende Medium elektrisch leitend ist und eine elektrische Meßsonde (2) im Abwasserrohr (1) bewegt wird, und an der Meßsonde eine Spannung angelegt wird, und der von einem mittleren, von mehreren sich auf gleichem Potential befindlichen Sondenteilen emittierte Ableitstrom gemessen wird, ***dadurch gekennzeichnet,*** daß durch eine Aufteilung der Meßströme der mittleren Meßsonde auf mehrere, jedoch mindestens 2 Meßelektroden, neben einer axialen auch eine radiale Lokalisierung eines Defekts im Abwasserrohr (1) ermöglicht wird.

2. Verfahren nach Anspruch 1, ***dadurch gekennzeichnet,*** daß durch die Aufteilung des Ableitstromes in mehrere einzelne Ableitströme (7, 8, 9,10) der Pegel des einzelnen Ableitstromes deutlich geringer ist, als der Pegel des Fehlstroms (11), wodurch sich eine störungsunabhängigere Meßmethode realisieren läßt, die Leckagen, die dem jeweiligen Meßsegment radial zugeordnet sind, eindeutig bestimmen.

3. Verfahren nach den Ansprüchen 1 und 2, ***dadurch gekennzeichnet**,* daß durch den Einsatz eines Winkelkodierers die Zuordnung der einzelnen radialen Segmente (3, 4, 5, 6) der mittleren Elektrode einer absoluten Position im Abwasserrohr (1) und damit die radiale Lokalisierung der Beschädigung des Abwasserrohres (1) ermöglicht wird.

4. Verfahren nach einem der Ansprüche 1 bis 3, ***dadurch gekennzeichnet**,* daß pro radialem Segment der Mittenelektrode eine quasi abtastende Strommessung durchgeführt wird.

5. Verfahren nach einem der Ansprüche 1 bis 4, ***dadurch gekennzeichnet,*** daß der Störabstand zwischen Ableitstrom und dem bei Leckagen auftretenden Fehlerstrom (11) bei der Messung von Leckagen proportional zur Anzahl der Segmente ansteigt, und so mit durch Erhöhung der Anzahl der Segmente ein störungsfreieres Signal des zu messenden Fehlerstroms (11) anhand der geringeren Überlagerung durch den Ableitstrom erreicht wird, indem der Pegel des Ableitstroms (7, 8, 9,10) gegenüber dem Pegel des Fehlerstroms (11) nur noch von geringer Bedeutung ist.

6. Vorrichtung zur Bestimmung von Ort und Ausmaß von Leckagen in Abwasserkanälen und ähnlichen Leitungssystemen, wobei die Rohrleitungen elektrisch nicht zu hoch und das darin strömende Medium elektrisch leitend sind und daß im Abwasserrohr (1) eine Meßsonde (2) bewegt wird, die aus einem Sondenkörper mit einem Mittelteil besteht, ***dadurch gekennzeichnet,*** daß der Mittelteil radial segmentförmig aufgeteilt ist und mit mehreren, jedoch mindestens zwei, Elektroden (27) ausgestattet ist, die mit Stromflußsensoren verbunden sind.

7. Vorrichtung nach Anspruch 6, ***dadurch gekennzeichnet,*** daß die Aufteilung der Segmente, auf denen die Elektroden (27) montiert werden, gleichmäßig um den Umfang der Sonde (2) verteilt ist.

8. Vorrichtung nach Anspruch 6, ***dadurch gekennzeichnet***, daß die Aufteilung der Segmente, auf denen die Elektroden (27) montiert sind, in der Weise gestaltet ist, daß sie in einem bestimmten Umfangsbereich der Sonde (2) in größerer Anzahl angeordnet sind, als im übrigen Umfangsbereich der Sonde (2).

9. Vorrichtung nach einem der Ansprüche 6 bis 8, ***dadurch gekennzeichnet,*** daß zusätzlich zum Mittelteil (13) der Sonde (2) der Sondenkörper (14) an seinem vorderen und hinteren Ende metallisch leitend ausgebildet ist.

10. Vorrichtung nach einem der Ansprüche 6 bis 9, ***dadurch gekennzeichnet,*** daß die Elektroden (27) des Mittelteils (13) und das vordere und hintere metallisch leitenden Ende des Sondenkörpers (14) auf gleichem Potential liegen und galvanisch miteinander verbunden sind.

11. Vorrichtung nach einem der Ansprüche 6 bis 9, ***dadurch gekennzeichnet,*** daß die Elektroden (27) des Mittelteils (13) und das vordere und hintere metallisch leitenden Ende des Sondenkörpers (14) auf gleichem Potential liegen, wobei die Potentialgleichheit durch eine entsprechende elektronische Schaltung verwirklicht ist.

12. Vorrichtung nach einem der Ansprüche 6 bis 11**, *dadurch gekennzeichnet,*** daß das vordere und hintere metallisch leitende Ende der Sonde (2) als sogenannte *Guard-Elektroden,* als rohrförmige Metallkörper ausgebildet sind.

13. Vorrichtung nach einem der Ansprüche 6 bis 12, ***dadurch gekennzeichnet,*** daß die Elektroden (27) plättchenförmig flächig ausgebildet sind, und mit jeweils einem eigenen Signalkabel verbunden sind.
